# EUROPEAN PATENT APPLICATION

(11) **EP 4 618 299 A1**
(43) Date of publication of application: **17.09.2025**
(21) Application number: 23907378.6
(22) Date of filing: 27.10.2023
(51) Int. Cl.: H01M 50/519, H01M 50/531, H01M 50/569, H01M 50/20

(54) **SECONDARY BATTERY MODULE**

(30) Priority: 22.12.2022 KR 20220181893
(71) Applicant: LG Energy Solution, Ltd., Seoul 07335 (KR)
(72) Inventor: KIM, Tae Youn, Daejeon 34122 (KR); SEO, Bo Hyun, Daejeon 34122 (KR); LEE, Seung Hyun, Daejeon 34122 (KR); KIM, Kyeong Min, Daejeon 34122 (KR)
(74) Representative: Plasseraud IP
(86) International application number: PCT/KR2023/016933
(87) International publication number: WO 2024/136092

(57) **Abstract**

The present invention relates to a secondary battery module including: a plurality of secondary batteries including a first electrode lead disposed at one side thereof; a module case which is configured to accommodate the plurality of secondary batteries and through which the first electrode lead passes through a plurality of slit holes defined in one surface thereof; a sensing circuit board which is mounted on the module case and on which a first land part plated with an electrically conductive metal is disposed on a surface thereof; a first plate bonded to the first land part; and a first wire connection part configured to connect the first plate to the first electrode lead through a wire.

## Description

### TECHNICAL FIELD

### CROSS-REFERENCE TO RELATED APPLICATION

The present application claims the benefit of the priority of Korean Patent Application No. 10-2022-0181893, filed on December 22, 2022, which is hereby incorporated by reference in its entirety.

### TECHNICAL FIELD

The present invention relates to a secondary battery module, and more particularly, to a secondary battery module in which an electrode lead of a secondary battery is connected to a sensing circuit board through a wire.

### BACKGROUND ART

Recently, the demand for secondary batteries that are capable of storing generated electrical energy due to the development of alternative energy due to air pollution caused by the use of fossil fuels and energy depletion is increasing. Secondary batteries that are chargeable and dischargeable are closely used in everyday life in addition to the use for mobile devices, electric vehicles, and hybrid electric vehicles.

Secondary batteries, which are used as energy sources for various electronic devices in modern society, are increasing in capacity due to an increase in usage and complexity of mobile devices and the development of electric vehicles. A plurality of secondary batteries are arranged in a small device to satisfy user demand, but a secondary battery module electrically connecting a plurality of secondary batteries or a secondary battery pack provided with the plurality of secondary battery modules is used in a vehicle or the like.

Such the secondary batteries may have parallel and/or series electrical connections inside the secondary battery module. Here, the electrical connection between the secondary batteries is often configured by providing a busbar assembly in the secondary battery module and bonding electrode leads of the secondary battery to the busbar. Here, since the busbar is connected to an interconnect board, and the interconnect board is connected to a cell-monitoring controller (CMC) circuit board, there is a problem that the structure of the secondary battery module becomes complicated. In addition, a flexible printed circuit board (FPCB) and a printed circuit board (PCB) used for the electrical connection to the secondary battery are configured to electrically connect the busbar bonded to the secondary battery to the secondary battery through a separate connector, and thus, there is a problem in that the number of components increases, a volume increases, and a structure becomes complicated.

### DISCLOSURE OF THE INVENTION

### TECHNICAL PROBLEM

The present invention is invented to solve the above problems, an object of the present invention is to provide a secondary battery module in which a busbar and an interconnect board are removed to simplify its structure and reduce a volume thereof.

### TECHNICAL SOLUTION

According to a first embodiment of the present invention, the present invention provides a secondary battery module including: a plurality of secondary batteries including a first electrode lead disposed at one side thereof; a module case which is configured to accommodate the plurality of secondary batteries and through which the first electrode lead passes through a plurality of slit holes defined in one surface thereof; a sensing circuit board which is mounted on the module case and on which a first land part plated with an electrically conductive metal is disposed on a surface thereof; a first plate bonded to the first land part; and a first wire connection part configured to connect the first plate to the first electrode lead through a wire.

The first plate may include a nickel (Ni) material.

The first plate may be bonded by a soldering process.

The plurality of slit holes may include a first slit hole and a second slit hole, which are defined at both sides of the first plate, respectively, a first electrode lead passing through the first slit hole and a second electrode lead passing through the second slit hole may be folded toward each other to overlap each other, and the overlapping first electrode leads may be bonded to each other.

The first wire connection part may be configured to connect the first electrode lead, which is disposed at the outermost surface, of the bonded first electrode leads to the first plate through the wire.

The sensing circuit board may be configured to sense a voltage of each of the secondary batteries.

The secondary battery module may further include: a flexible circuit board which is mounted on the other surface of the module case and on which a second land part plated with an electrically conductive metal is disposed on a surface thereof; a second plate bonded to the second land part; and a second wire connection part configured to connect a second electrode lead, which is disposed at the other side of the secondary batteries, to the second plate through a wire.

A first lead hole and a second lead hole may be defined on the other surface of the module case at both sides of the second plate, respectively, a second electrode lead passing through the first lead hole and a second electrode lead passing through the second lead hole may be folded toward each other to overlap each other, and the overlapping second electrode leads may be bonded to each other.

The second wire connection part may be configured to connect the second electrode lead, which is disposed at the outermost surface, of the bonded second electrode leads to the second plate through the wire.

The secondary battery module may further include a connector configured to electrically connect the sensing circuit board to the flexible circuit board.

The connector may include: a first connecting unit coupled to the sensing circuit board; a second connecting unit coupled to the flexible circuit board; and a cable configured to connect the first connecting unit to the second connecting unit.

According to a second embodiment of the present invention, the present invention provides a secondary battery pack including: a plurality of secondary battery modules; and a pack case configured to accommodate the plurality of secondary battery modules, wherein each of the secondary battery module includes: a plurality of secondary batteries comprising a first electrode lead disposed at one side thereof; a module case which is configured to accommodate the plurality of secondary batteries and through which the first electrode lead passes through a plurality of slit holes defined in one surface thereof; a sensing circuit board which is mounted on the module case and on which a first land part plated with an electrically conductive metal is disposed on a surface thereof; a first plate bonded to the first land part; and a first wire connection part configured to connect the first plate to the first electrode lead through a wire.

### ADVANTAGEOUS EFFECTS

The present invention may be configured so that, since the electrode leads facing each other are folded to overlap each other, the overlapping electrode leads are bonded to each other at once, the positions of the electrode leads are stably fixed to replace the existing busbar, and also, since the electrode lead and the sensing circuit board are directly connected to each other through the wire to replace the interconnect board (ICB) connected to the busbar, the structure of the secondary battery module is simplified, and the volume of the secondary battery module is reduced. In addition, since the electrode lead of the secondary battery and the sensing circuit board are directly connected to each other through the wire without the separate connector cable, the structure of the secondary battery may be simplified.

### BRIEF DESCRIPTION OF THE DRAWINGS

FIG. 1 is a perspective view illustrating one surface of a module case of a secondary battery according to a first embodiment of the present invention, i.e., an enlarged view illustrating a state in which first electrode leads are bonded to overlap each other and are connected to a first plate through a wire.

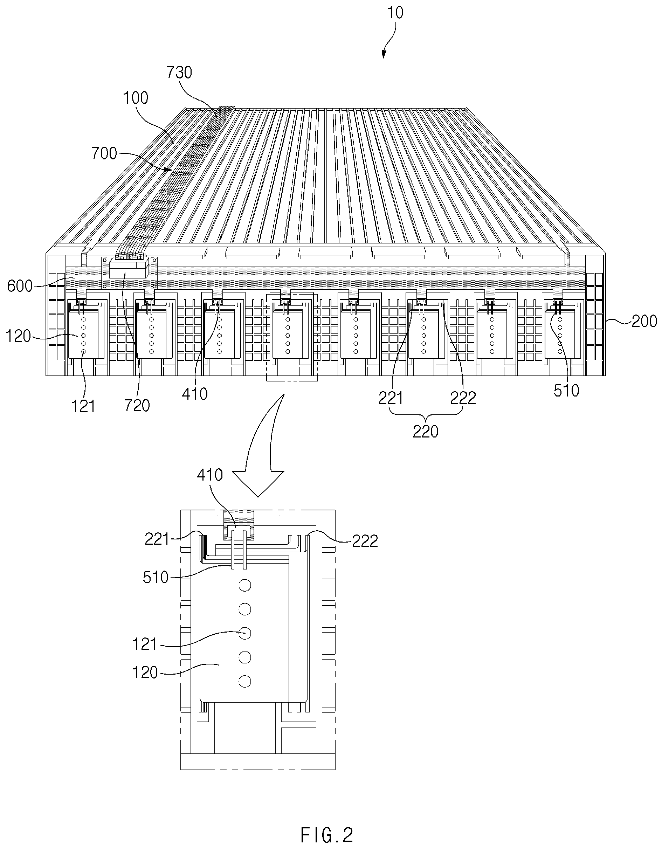

FIG. 2 is a perspective view illustrating the other surface of a module case of a secondary battery according to the first embodiment of the present invention, i.e., an enlarged view illustrating a state in which first electrode leads are bonded to overlap each other and are connected to a second plate through a wire.

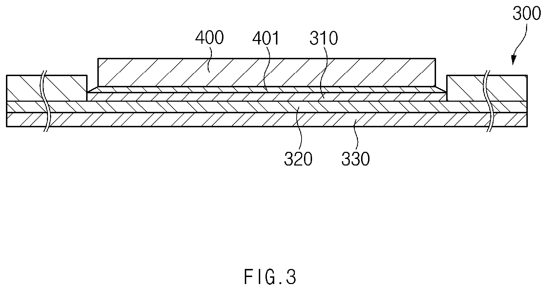

FIG. 3 is a cross-sectional view of a sensing circuit board having a configuration, in which the first plate is bonded, according to the first embodiment of the present invention.

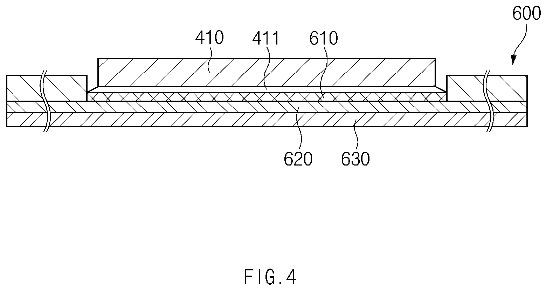

FIG. 4 is a cross-sectional view of a flexible circuit board having a configuration, in which the second plate is bonded, according to the first embodiment of the present invention.

### MODE FOR CARRYING OUT THE INVENTION

Hereinafter, it will be described about an exemplary embodiment of the present invention in conjunction with the accompanying drawings. However, the following drawings are intended to facilitate the understanding of the present invention and are only one embodiment of the present invention, and the scope of the present invention is not limited to the range described in the drawings. In addition, in the following drawings, the same symbols refer to the same components, and some components may be exaggerated, miniatured, or omitted for easier understanding of the invention.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### First embodiment

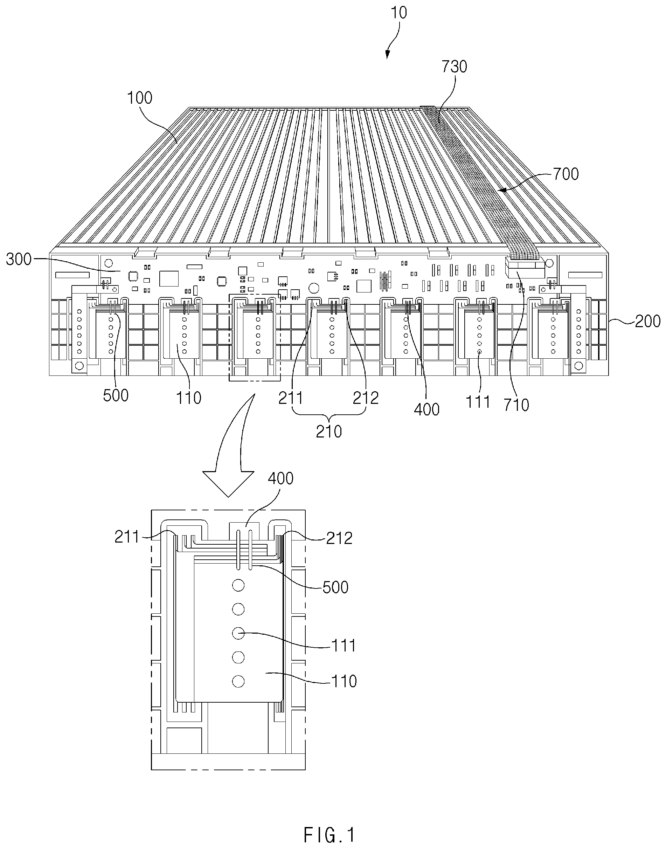

Referring to FIG. 1, as one embodiment of the present invention, a secondary battery module 10 of the present invention may include a secondary battery 100, a module case 200, a sensing circuit board 300, a first plate 400, and a first wire connection part 500.

The secondary battery 100 may have a structure, in which an electrode assembly (not shown) is accommodated in a pouch-type battery case, and also, a first electrode lead 110 protrudes from one side of the battery case, and a second electrode lead 120 protrudes from the other side of the battery case. That is, the secondary battery 100 may include the first electrode lead 110 disposed at one side and the second electrode lead 120 disposed at the other side.

The electrode assembly may have a structure in which positive electrode collector/positive electrode active material layer/separator/negative electrode active material layer/negative electrode collector are sequentially stacked. A positive electrode non-coating portion area may function as a positive electrode tab. The negative electrode collector may include an area coated with a negative electrode active material layer and an area that is not coated with the negative electrode active material, and the negative electrode non-coating portion area may function as a negative electrode tab. The separator may be disposed between the positive electrode collector and the negative electrode collector to prevent the collectors having different polarities from being in contact with each other. The first electrode lead 110 may be connected to the positive electrode non-coating portion or the negative electrode non-coating portion, and the second electrode lead 120 may also be connected to the positive electrode non-coating portion or the negative electrode non-coating portion.

The module case 200 may refer to a frame that defines an outer appearance of the secondary battery module 10, and may have an accommodation space therein. The plurality of secondary batteries 100 may be accommodated in the accommodation space defined inside the module case 200, and the module case 200 may surround the stack of the plurality of secondary batteries 100 with inner walls at four sides to stably support the stacked form of the secondary batteries 100.

The secondary batteries 100 accommodated in the module case 200 may be disposed so that the first electrode lead 110 faces a direction in which a slit hole is defined, and the second electrode lead 120 faces a direction in which a lead hole 220 is defined.

The plurality of secondary batteries 100 accommodated in the accommodation space of the module case 200 may be stacked in a width direction of the module case 200 so that narrow surfaces stand to face upper and lower sides, and wide surfaces are in contact with each other. Here, the width direction of the module case 200 may mean a longitudinal direction of the surface of the module case 200 on which the sensing circuit board 300 or the flexible circuit board 600 is mounted.

A plurality of slit holes 210 may be defined in one surface of the module case 200. The one surface of the module case 200 may refer to a surface that defines a width of the module case 200 and also may mean a surface defined in the direction in which the first electrode lead 110 of the secondary battery 100 is disposed. The other surface of the module case 200 may refer to a surface defined in an opposite direction of the one surface.

The slit hole 210 may be a hole through which each of the first electrode leads 110 of the plurality of secondary batteries 100 accommodated in the accommodation space of the module case 200 passes through the module 200 to protrude to the outside of the module case 200.

The slit hole 210 may be defined in a longitudinal direction that is the vertical direction so that the first electrode lead 110 passes therethrough and may have a narrow width.

The plurality of slit holes 210 may be divided into a first slit hole 211 and a second slit hole 212 according to their respective positions based on the position of the first plate 400. The first slit hole 211 of the plurality of slit holes may refer to a slit hole 210 defined in one direction centered on the position of the first plate 400 and be disposed adjacent to the first plate 400. The second slit hole 212 of the plurality of slit holes 210 may refer to a slit hole 210 defined in the other direction centered on the position of the first plate 400 and be disposed adjacent to the first plate 400. That is, the first slit hole 211 and the second slit hole 212 may be defined at both sides of the first plate 400. Since the first slit hole 211 and the second slit hole 212 are defined at both the sides of the first plate 400, a process of bonding the first electrode leads 110, which pass through the first slit hole 211 and the second slit hole 212, to each other may be performed at once to improve efficiency of the manufacturing process.

The first electrode leads 110 that pass through the first slit hole 211 and the first electrode leads 110 that pass through the second slit hole 212 may face each other, and also, the first electrode leads 110 that pass through the first slit hole 211 and the first electrode leads 110 that pass through the second slit hole 212 may be folded toward each other to overlap each other so as to be bonded to each other. The plurality of first electrode leads 110 that are folded to overlap each other may be bonded to each other. More specifically, the plurality of overlapping first electrode leads 110 may be bonded to each other by a welding method, and the welding method is not limited thereto, but includes, for example, laser welding, electric resistance welding, ultrasonic welding, spot welding, and the like. The first electrode leads 110 bonded together may be electrically connected to each other, and the position and the folded form may be stably fixed. A first welding part 111 may be disposed on the outermost surface of the plurality of first electrode leads 110 that are welded together. Therefore, the first electrode leads 110 that are bonded together may be bonded between the first electrode leads 110 so as to be stably fixed in position, thereby simplifying the structure of the secondary battery module 10 and reducing the volume by replacing the existing busbar.

The first plate 400 may be provided in plurality in the width direction of one surface of the module case 200, and thus, the first slit hole 211 and the second slit hole 212 may also be disposed adjacent to both sides of the first plate 400 at each position.

The plurality of first slit holes 211 and the plurality of second slit holes 212 may be defined at both the sides of one first plate 400. Thus, the first electrode leads 110 passing through the plurality of first slit holes 211 and the first electrode leads 110 passing through the plurality of second slit holes 212 may be folded toward each other to overlap each other. The plurality of overlapping first electrode leads 110 may be bonded to each other at once to maximize process efficiency. The plurality of overlapping first electrode leads 110 may be bonded to each other by a welding method, and the welding method is not limited thereto, but includes, for example, laser welding, electric resistance welding, ultrasonic welding, spot welding, and the like.

A plurality of lead holes 220 may be defined in the other surface of the module case 200. The other surface of the module case 200 may refer to a surface that defines a width of the module case 200 and also may mean a surface defined in the direction in which the second electrode lead 120 of the secondary battery 100 is disposed. The other surface of the module case 200 may refer to a surface defined in an opposite direction of the one surface.

The lead hole 220 may be a hole through which each of the second electrode leads 120 of the plurality of secondary batteries 100 accommodated in the accommodation space of the module case 200 passes through the module 200 to protrude to the outside of the module case 200. The lead hole 220 may refer to a hole defined in a longitudinal direction that is a vertical direction so that the second electrode lead 120 passes therethrough and may have a narrow width.

The plurality of lead holes 220 may be divided into a first lead hole 221 and a second lead hole 222 according to their respective positions based on the position of the second plate 410. The first lead hole 221 of the plurality of lead holes 220 may refer to a lead hole 220 defined in one direction centered on the position of the second plate 410 and be disposed adjacent to the second plate 410. The second lead hole 222 of the plurality of lead holes 220 may refer to a lead hole 220 defined in the other direction centered on the position of the second plate 410 and be disposed adjacent to the second plate 410. That is, the first lead hole 221 and the second lead hole 222 may be defined at both sides of the second plate 410. Since the first lead hole 221 and the second lead hole 222 are defined at both the sides of the second plate 410, a process of boding the second electrode leads 120, which pass through the first lead hole 221 and the second lead hold 222, to each other may be performed at once to improve the efficiency.

The second electrode leads 120 that pass through the first lead hole 221 and the second electrode leads 120 that pass through the second lead hole 222 may face each other, and also, the second electrode leads 120 that pass through the first lead hole 221 and the second electrode leads 120 that pass through the second lead hole 222 may be folded toward each other to overlap each other so as to be bonded to each other. The plurality of second electrode leads 120 that are folded to overlap each other may be bonded to each other. The plurality of overlapping second electrode leads 120 may be bonded to each other by a welding method, and the welding method is not limited thereto, but includes, for example, laser welding, electric resistance welding, ultrasonic welding, spot welding, and the like. The second electrode leads 120 bonded together may be electrically connected to each other, and the position and the folded form may be stably fixed. A second welding part 121 may be disposed on the outermost surface of the plurality of second electrode leads 120 that are welded together. Therefore, the second electrode leads 120 that are bonded together may be bonded between the second electrode leads 120 so as to be stably fixed in position, thereby simplifying the structure of the secondary battery module 10 and reducing the volume by replacing the existing busbar.

The second plate 410 may be provided in plurality in the width direction of the other surface of the module case 200, and thus, the first slit hole 211 and the second slit hole 212 may also be disposed adjacent to both sides of the first plate 400 at each position.

The plurality of first lead holes 221 and the plurality of second lead holes 222 may be defined at both the sides of one second plate 410. Thus, the second electrode leads 120 passing through the plurality of first lead holes 221 and the second electrode leads 120 passing through the plurality of second lead holes 222 may be folded toward each other to overlap each other. The plurality of overlapping second electrode leads 120 may be bonded to each other at once to maximize process efficiency. The plurality of overlapping second electrode leads 120 may be bonded to each other by a welding method, and the welding method is not limited thereto, but includes, for example, laser welding, electric resistance welding, ultrasonic welding, spot welding, and the like. A first welding part 111 may be disposed on the outermost surface of the plurality of second electrode leads 120 that are welded together.

The sensing circuit board 300 may be mounted on one surface of the module case 200 to sense voltages and temperatures of the secondary batteries 100, thereby transmitting the sensed values to a battery management system (BMS). The sensing circuit board 300 may be a cell-monitoring controller (CMC) circuit board. The sensing circuit board 300 may be mounted on one surface of the module case 200 adjacent to a position at which the first electrode lead 110 protrudes through the slit hole 210 to facilitate connection to the first electrode lead 110. In particular, a first land part 310 of the sensing circuit board 300 may be disposed adjacent to the overlapping first electrode leads 110 so as to be connected to the first electrode lead 110 through a wire.

The sensing circuit board 300 may include a first support part 330 that supports the board, a first metal layer 320 that defines a circuit of the sensing circuit board 300 above the first support part 330, and the first land part 310 electrically connected to the first metal layer 320.

The first land part 310 having a predetermined width may be provided on the sensing circuit board 300 so as to be electrically connected to the first electrode lead 110 of the secondary battery 100.

The first land part 310 may be provided by plating an electrically conductive metal on a surface of the first metal layer so as to be electrically connected to the first metal layer defining the circuit of the sensing circuit board 300. The plated metal is not limited thereto, but may be a material such as, for example, gold, silver, copper, aluminum, or tin.

However, since the first land part 310 is not easily bonded to the wire for the electrical connection to the first electrode lead 110, the first plate 400 made of the material that facilitates the bonding of the wire may be bonded to a top surface of the first land part 310.

The first plate 400 may be provided in a shape of a thin plate made of the electrically conductive metal material. The first plate 400 may be bonded to the first land part 310, and the first plate 400 may be bonded to the first land part 310 through a soldering process. Thus, a first soldering layer 401 that is melted and then cooled and solidified may be provided between the first plate 400 and the first land part 310.

The first plate 400 may be made of a material that is not easily oxidized and has excellent chemical resistance to prevent an oxide film from being formed on the surface, thereby facilitating the bonding to a first wire connection part 500. For example, the first plate 400 may include one or more materials of nickel (Ni), palladium (Pd), gold (Au), and chromium (Cr), and preferably includes nickel or a nickel alloy material in which chromium is added to nickel.

The first wire connection part 500 may connect an outer surface of the first electrode lead 110 disposed on the outermost surface of the first electrode leads 110, which are bonded to overlap each other, to an outer surface of the first plate 400 through the wire. That is, the first wire connection part 500 may directly connect the first electrode lead 110 to the first plate 400 adhering to the sensing circuit board 300 through the wire. This is because the battery module has a more simplified structure compared to a structure in which the existing battery module connects the plurality of electrode leads to the busbar, connects the busbar to an interconnect board (ICB), and connects the interconnect board to the sensing circuit board 300 through a connecting cable, and thus, the secondary battery module 10 may be reduced in volume.

The wire provided in the first wire connection part 500 may be made of a metal that is made of the electrically conductive material. The wire is not limited thereto, but may be made of, for example, one or more materials selected from gold (Au), aluminum (Al), copper (Cu), and silver (Ag).

The first wire connection part 500 may connect the first electrode lead 110 to the first plate 400 through a plurality of wires.

The secondary battery module 10 may further include a flexible circuit board 600, a second plate 410, and a second wire connection part 510.

The flexible circuit board 600 may be mounted on the other surface of the module case 200 and may be electrically connected to the second electrode leads 120 of the secondary batteries 100. The flexible circuit board 600 may be mounted at a position adjacent to the second electrode leads 120 passing through the lead hole 220 so that the flexible circuit board 600 is electrically connected to the second electrode leads 120.

The flexible circuit board 600 may have a variable shape, such as being easily bent because of being made of a flexible material. For example, the flexible circuit board 600 may be a polyimide film, polyester film, etc.

Since the flexible circuit board 600 is electrically connected to the second electrode lead 120, the voltage of the second electrode lead 120 may be sensed. The voltage sensed by the flexible circuit board 600 may be transmitted to the sensing circuit board 300 through a connector 700.

The sensing circuit board 600 may be mounted on the other surface of the module case 200 adjacent to a position at which the second electrode lead 210 protrudes through the lead hole 220 to facilitate the connection to the second electrode lead 120. In particular, a second land part 610 of the flexible circuit board 600 may be disposed adjacent to the overlapping second electrode leads 120 so as to be connected to the second electrode lead 120 through a wire.

The flexible circuit board 600 may include a second support part 630 that supports the board, a second metal layer 620 that defines a circuit of the flexible circuit board 600 above the second support part 630, and the second land part 610 electrically connected to the second metal layer 620.

The second land part 610 having a predetermined width may be provided on the flexible circuit board 600 so as to be electrically connected to the second electrode lead 120 of the secondary battery 100. The second land part 610 may be disposed at a position that is branched by a predetermined length from the longitudinal direction of the flexible circuit board 600 in the direction in which the second electrode lead 120 is disposed.

The second land part 610 may be provided by plating an electrically conductive metal on a surface of the second metal layer so as to be electrically connected to the second metal layer defining the circuit of the flexible circuit board 600. The plated metal is not limited thereto, but may be a material such as, for example, gold, silver, copper, aluminum, or tin.

Since the second land part 610 is not easily bonded to the wire for the electrical connection to the second electrode lead 120, the second plate 410 made of the material that facilitates the bonding of the wire may be bonded to a top surface of the second land part 610.

The second plate 410 may be provided in a shape of a thin plate made of the electrically conductive metal material. The second plate 410 may be bonded to the second land part 610, and the second plate 410 may be bonded to the second land part 610 through a soldering process. Thus, a second soldering layer 411 that is melted and then cooled and solidified may be provided between the second plate 410 and the second land part 610.

The second plate 410 may be made of a material that is not easily oxidized and has excellent chemical resistance to prevent an oxide film from being formed on the surface, thereby facilitating the bonding to a second wire connection part 510. For example, the first plate 400 may include one or more materials of nickel (Ni), palladium (Pd), gold (Au), and chromium (Cr), and preferably includes nickel or a nickel alloy material in which chromium is added to nickel.

The second wire connection part 510 may connect an outer surface of the second electrode lead 120 disposed on the outermost surface of the second electrode leads 120, which are bonded to overlap each other, to an outer surface of the second plate 410 through the wire. That is, the second wire connection part 510 may directly connect the second electrode lead 120 to the second plate 410 adhering to the flexible circuit board 600 through the wire. This is because the battery module has a more simplified structure compared to a structure in which the existing battery module connects the plurality of electrode leads to the busbar, connects the busbar to an interconnect board (ICB), and connects the interconnect board to the sensing circuit board 300 through a connection unit, and thus, the secondary battery module 10 may be reduced in volume.

The wire provided in the second wire connection part 510 may be made of a metal that is made of the electrically conductive material. The wire is not limited thereto, but may be made of, for example, one or more materials selected from gold (Au), aluminum (Al), copper (Cu), and silver (Ag).

The second wire connection part 510 may connect the second electrode lead 120 to the second plate 410 through a plurality of wires.

The connector 700 may electrically connect the flexible circuit board 600 to the sensing circuit board 300 to transmit values sensed by the flexible circuit board 600 to the sensing circuit board 300.

The connector 700 may include a first connecting unit 710, a second connecting unit 720, and a cable 730.

The first connecting unit 710 may be coupled to one surface of the sensing circuit board 300, the second connecting unit 720 may be coupled to one side of the flexible circuit board 600, and the cable 730 may connect the first connecting unit 710 to the second connecting unit 720. The cable 730 may be disposed along a length direction of the secondary battery 100 to transmit information such as a voltage and temperature between the first connecting unit 710 and the second connecting unit 720.

### Second embodiment

According to a second embodiment of the present invention, a pack (not shown) of a secondary battery 100 of the present invention may include a plurality of secondary battery modules 10 and a pack case (not shown) accommodating the plurality of secondary battery modules 10. The secondary battery module 10 may include a plurality of secondary batteries 100 including a first electrode lead 110 disposed at one side thereof, a module case 200 which accommodates the plurality of secondary batteries 100 and through which the first electrode lead 110 passes through a plurality of slit holes defined in one surface thereof, a sensing circuit board 300 which is mounted on the module case 200 and on which a first land part 310 plated with an electrically conductive metal is disposed on a surface thereof, a first plate 400 bonded to the first land part 310, and a first wire connection part 500 connecting the first plate 400 to the first electrode lead 110 through a wire. The detailed description of the secondary battery module 10 will be replaced with the content described above.

Although the present technology has been described through the above examples, the present technology is not limited thereto. The above embodiments may be modified or changed without departing from the spirit and scope of the present technology, and those skilled in the art will recognize that such modifications and changes also belong to the present technology.

### [Description of the Symbols]

- 10:: Secondary battery module
- 100:: Secondary battery
- 110:: First electrode lead
- 111:: First welding part
- 120:: Second electrode lead
- 121:: Second welding part
- 200:: Module case
- 210:: Slit hole
- 211:: First slit hole
- 212:: Second slit hole
- 220:: Lead hole
- 221:: First lead hole
- 222:: Second lead hole
- 300:: Sensing circuit board
- 310:: First land part
- 320:: First metal layer
- 330:: First support part
- 400:: First plate
- 401:: First soldering layer
- 410:: Second plate
- 411:: Second soldering layer
- 500:: First wire connection port
- 510:: Second wire connection port
- 600:: Flexible circuit board
- 610:: Second land layer
- 620:: Second metal layer
- 630:: Second support part
- 700:: Connector
- 710:: First connecting unit
- 720:: Second connecting unit
- 730:: Cable

## Claims

1. A secondary battery module comprising:
a plurality of secondary batteries comprising a first electrode lead disposed at one side thereof;
a module case which is configured to accommodate the plurality of secondary batteries and through which the first electrode lead passes through a plurality of slit holes defined in one surface thereof;
a sensing circuit board which is mounted on the module case and on which a first land part plated with an electrically conductive metal is disposed on a surface thereof;
a first plate bonded to the first land part; and
a first wire connection part configured to connect the first plate to the first electrode lead through a wire.

2. The secondary battery module of claim 1, wherein the first plate comprises a nickel (Ni) material.

3. The secondary battery module of claim 1, wherein the first plate is bonded by a soldering process.

4. The secondary battery module of claim 1, wherein the plurality of slit holes comprises a first slit hole and a second slit hole, which are defined at both sides of the first plate, respectively,
a first electrode lead passing through the first slit hole and a second electrode lead passing through the second slit hole are folded toward each other to overlap each other, and
the overlapping first electrode leads are bonded to each other.

5. The secondary battery module of claim 4, wherein the first wire connection part is configured to connect the first electrode lead, which is disposed at the outermost surface, of the bonded first electrode leads to the first plate through the wire.

6. The secondary battery module of claim 1, wherein the sensing circuit board is configured to sense a voltage of each of the secondary batteries.

7. The secondary battery module of claim 1, further comprising:
a flexible circuit board which is mounted on the other surface of the module case and on which a second land part plated with an electrically conductive metal is disposed on a surface thereof;
a second plate bonded to the second land part; and
a second wire connection part configured to connect a second electrode lead, which is disposed at the other side of the secondary batteries, to the second plate through a wire.

8. The secondary battery module of claim 7, wherein a first lead hole and a second lead hole are defined on the other surface of the module case at both sides of the second plate, respectively,
a second electrode lead passing through the first lead hole and a second electrode lead passing through the second lead hole are folded toward each other to overlap each other, and
the overlapping second electrode leads are bonded to each other.

9. The secondary battery module of claim 8, wherein the second wire connection part is configured to connect the second electrode lead, which is disposed at the outermost surface, of the bonded second electrode leads to the second plate through the wire.

10. The secondary battery module of claim 7, further comprising a connector configured to electrically connect the sensing circuit board to the flexible circuit board.

11. The secondary battery module of claim 10, wherein the connector comprises:
a first connecting unit coupled to the sensing circuit board;
a second connecting unit coupled to the flexible circuit board; and
a cable configured to connect the first connecting unit to the second connecting unit.

12. A secondary battery pack comprising:
a plurality of secondary battery modules; and
a pack case configured to accommodate the plurality of secondary battery modules,
wherein each of the secondary battery module comprises:
a plurality of secondary batteries comprising a first electrode lead disposed at one side thereof;
a module case which is configured to accommodate the plurality of secondary batteries and through which the first electrode lead passes through a plurality of slit holes defined in one surface thereof;
a sensing circuit board which is mounted on the module case and on which a first land part plated with an electrically conductive metal is disposed on a surface thereof;
a first plate bonded to the first land part; and
a first wire connection part configured to connect the first plate to the first electrode lead through a wire.
